# EUROPÄISCHE PATENTSCHRIFT

(11) **EP 2 174 403 B1**
(45) Veröffentlichungstag und Bekanntmachung des Hinweises auf die Patenterteilung: **22.08.2012**
(21) Anmeldenummer: 08774630.1
(22) Anmeldetag: 02.07.2008
(51) Int. Cl.: H02K 3/12

(54) **ELEKTRISCHE MASCHINE, INSBESONDERE DREHSTROM-ASYNCHRON-HYDROGENERATOR**
ELECTRIC MACHINE, PARTICULARLY ASYNCHRONOUS THREE-PHASE CURRENT HYDROGENERATOR
MACHINE ÉLECTRIQUE, EN PARTICULIER HYDROGÉNÉRATRICE ASYNCHRONE À COURANT TRIPHASE

(30) Priorität: 03.08.2007 DE 102007036806; 08.11.2007 DE 102007000661
(43) Veröffentlichungstag der Anmeldung: 14.04.2010
(73) Patentinhaber: Alstom Technology Ltd, 5400 Baden (CH)
(72) Erfinder: SCHMID, Matthias, CH-5106 Veltheim (CH); KLAMT, Thomas, CH-5107 Schinznach-Dorf (CH); MIKIC, Ivan, CH-5242 Birr (CH)
(86) Internationale Anmeldenummer: PCT/EP2008/058494
(87) Internationale Veröffentlichungsnummer: WO 2009/019087

(56) Entgegenhaltungen:
- DE-B- 1 207 999
- US-A- 3 675 058
- US-A- 5 789 840

## Beschreibung

### TECHNISCHES GEBIET

Die vorliegende Erfindung bezieht sich auf das Gebiet der elektrischen Maschinen. Sie betrifft eine Wicklung einer elektrischen Maschine, insbesondere eines Hydrogenerators, gemäss dem Oberbegriff des Anspruchs 1.

### STAND DER TECHNIK

Durch die veränderten marktwirtschaftlichen Bedingungen an den geöffneten Strommärkten und den verbesserten Technologien im Bereich der Leistungselektronik hat das Thema drehzahlvariabler Antriebe zur Energieproduktion an Bedeutung gewonnen. Für diesen Zweck werden insbesondere bei Leistungen über 60 MVA bevorzugt doppelt gespeiste Asynchronmaschinen eingesetzt.

Der Stator dieses Maschinentypus unterscheidet sich nicht von den für diese Anwendung gebräuchlichen Schenkelpolsynchronmaschinen. Maschinen dieses Typs zeichnen sich dadurch aus, dass sie sowohl auf dem Stator wie auch auf dem Rotor mit einer Dreiphasenwicklung ausgestattet sind. Üblicherweise sind dabei die Wickelköpfe der Rotorwicklung auf einer zylindrischen Oberfläche angeordnet (DE-A1-195 13 457).

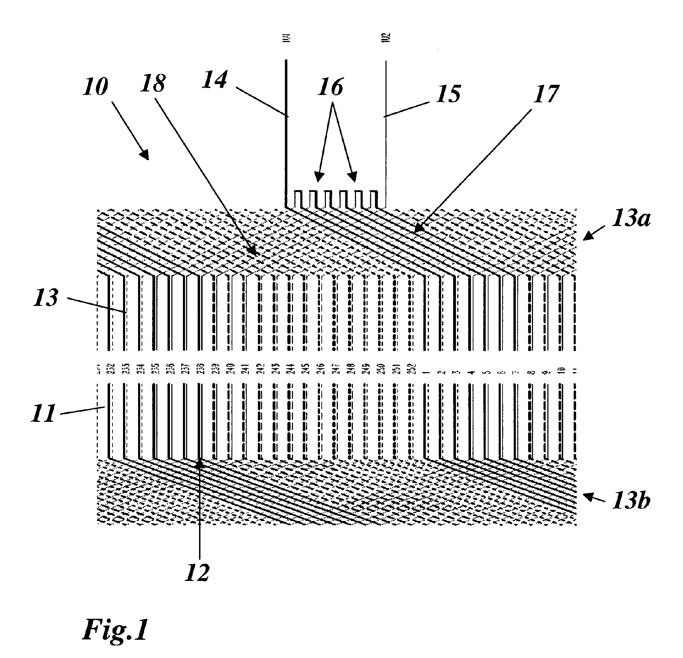

Ein entsprechendes (dreiphasiges) Wicklungsschema, zum Beispiel für einen Rotor, ist in Fig. 1 wiedergegeben, wobei der Rotorumfang in der Zeichnungsebene abgerollt dargestellt ist: Der Rotor 10 hat ein Rotorjoch 11, in welchem in axialer Richtung verlaufende Wicklungsnuten 12 vorgesehen sind. Die Wicklungsnuten 12 nehmen die Wicklung 13 auf, die aus Wicklungsstäben 17, 18 gebildet wird. Jede Phase ist in einer anderen Strichart (kurz gestrichelt, lang gestrichelt, durchgezogen) dargestellt. Je zwei Wicklungsstäbe 17, 18 sind in einer Wicklungsnut übereinander liegend untergebracht. An den Stirnseiten des Rotors 10 treten die Wicklungsstäbe 17, 18 aus den Wicklungsnuten 12 heraus und werden nach einem vorgegebenen Schema innerhalb eines Wickelkopfes 13a bzw. 13b mehrheitlich an den Enden paarweise miteinander elektrisch verbunden (Verbindungen 16). Die übrigen Wicklungsstäbe werden als Anschlüsse 14, 15 nach aussen herausgeführt.

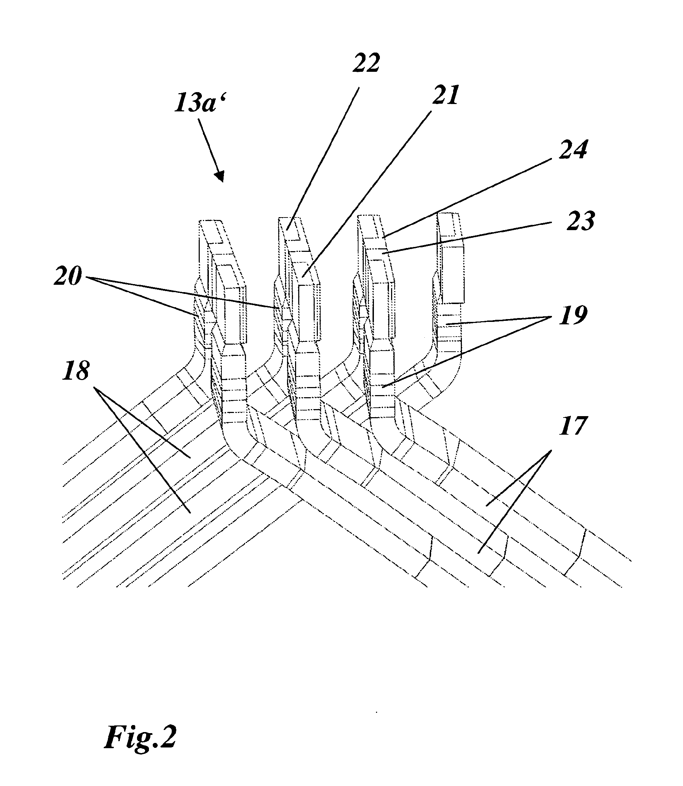

Zum paarweisen Verbinden werden im Stand der Technik jeweils ein oberer Wicklungsstab 18 einer ersten Wicklungsnut und ein unterer Wicklungsstab 17 einer zweiten Wicklungsnut am Ende des Rotorjochs 11 derartig aufeinander zugebogen, dass die beiden Enden in radialer Richtung übereinander liegen, wie dies in Fig. 2 in einem vergrösserten Ausschnitt für einen Wickelkopf 13a' wiedergegeben ist. An den Enden der aufeinander zugebogenen Wicklungsstäbe 17, 18 werden durch eine zweite Biegung die Stabenden 19, 20 übereinander liegend parallel ausgerichtet. Die von der Isolierung freigelegten Leiter der Wicklungsstäbe 17, 18 bilden in diesem Bereich Laschen 21, 22 mit rechteckigem Querschnitt, an denen dann jeweils ein winkelförmiges Verbindungsteil 23 bzw. 24 angebracht wird. Die elektrisch leitende Verbindung 16 (Fig. 1) wird schliesslich durch das Verbinden der beiden Verbindungsteile 23, 24 bewirkt.

Die bekannte Ausbildung des Wickelkopfes 13a' gemäss Fig. 2 hat verschiedene Nachteile: Zum einen ist eine zweite Biegung an den Stabenden 19, 20 notwendig, die zusätzlichen Aufwand erfordert. Zum anderen wird für die parallel laufenden Stabenden 19, 20 zusätzliches Kupfermaterial benötigt, wodurch sich nicht nur die Materialkosten erhöhen, sondern auch die axiale Länge des Wickelkopfes und der Wicklungswiderstand vergrössern.

Es ist daher in der US-A-5,789,840 bereits vorgeschlagen worden, bei einer Statorwicklung die zweite Biegung im Wickelkopf wegzulassen, und die sich kreuzenden Enden der zu verbindenden Wicklungsstäbe mittels eines speziellen mehrteiligen Verbindungsteils zu verbinden. Nachteilig ist bei dieser Lösung jedoch der mehrteilige Aufbau des Verbindungsteils, das sich aus zwei U-förmigen Verbindungselementen (62, 64) und einem in der Mitte angeordneten Drehstift (66) zusammensetzt. Durch den mehrteiligen Aufbau kann das Verbindungselement zwar an unterschiedliche Kreuzungswinkel angepasst werden, ist jedoch in Herstellung und Montage aufwändig, wenn eine Vielzahl von Verbindungen hergestellt werden muss.

Die Schrift US-A-3,675,058 offenbart ein vorgefertigtes Verbindungselement für eine elektrodynamische Maschine, das insbesondere in mit Aluminiumleitern ausgerüsteten Motoren zum Betrieb in korrosiver Umgebung vorteilhaft zur Anwendung gelangen soll. Das im Wesentlichen einteilig als quaderförmiger Block ausgebildete Verbindungselement (14, 16) weist eine Anzahl rechteckförmiger Durchbrüche (30) oder Schlitze (38, 42) auf, in die in Form und Dimension komplementär ausgebildete Leiterstäbe (40, 44) eingesteckt sind. Auch dieses Verbindungselement (14, 16) weist die bereits weiter oben genannten Nachteile auf. Die Leiterstäbe sind derart zurechtzubiegen, dass sie stets parallel oder senkrecht zueinander enden. Seine Einsatzmöglichkeiten sind erheblich beschränkt.

### DARSTELLUNG DER ERFINDUNG

Es ist daher Aufgabe der Erfindung, eine elektrische Maschine der eingangs genannten Art so auszubilden, dass die Nachteile bekannter Maschinen vermieden werden und insbesondere unter Beibehaltung eines axial verkürzten Wickelkopfes eine vereinfachte Montage und gleichzeitig ein mechanisch stabilerer Aufbau ermöglicht werden.

Die Aufgabe wird im Wesentlichen dadurch gelöst, dass das verbindungselement einstückig ist, und **dass das** Verbindungselement als in radialer Richtung orientierte Rundöse ausgebildet ist, welche zwei in radialer Richtung kreuzend übereinander liegende Anlageflächen zur Anlage an den Laschen der miteinander zu verbindenden Wicklungsstäbe aufweist. Da der Kreuzungswinkel im Wickelkopf in den meisten Fällen für alle Verbindungen gleich ist, wird nur eine Art von Rundöse in zwei Ausführungen, welche zueinander spiegelverkehrt sind, benötigt. Diese können auf einfache Weise vorgefertigt werden. Aufgrund der Einstückigkeit braucht das Verbindungselement nur mit den beiden Stabenden verbunden zu werden. Insbesondere besteht nicht die Gefahr, dass das Verbindungselement bei Fliehkraft- oder Vibrationsbelastung in einzelne Bestandteile zerfällt. Darüber hinaus ergeben sich aufgrund der Einstückigkeit Vorteile bei der Stromleitung, weil die Übergangswiderstände minimiert sind.

Gemäss einer Ausgestaltung der Erfindung weist die Rundöse eine zylindrische Grundform auf, wobei die Anlageflächen parallel zur Zylinderachse angeordnet sind und von der Zylinderachse einen Abstand aufweisen, welcher der halben Dicke der Laschen entspricht.

Weiterhin ist es für die elektrischen und mechanischen Eigenschaften von Vorteil, wenn die Rundöse zwischen den beiden Anlageflächen ein Mittelstück aufweist.

Vorzugsweise ist die Länge der Laschen kleiner oder gleich dem Aussendurchmesser der Rundöse. Dadurch wird vermieden, dass die Laschen auf störende Weise über die Rundöse hinausragen.

Die Wicklung ist vorzugsweise die Rotorwicklung der Maschine. Sie kann aber auch die Statorwicklung der Maschine sein.

### KURZE ERLÄUTERUNG DER FIGUREN

Die Erfindung soll nachfolgend anhand von Ausführungsbeispielen im Zusammenhang mit der Zeichnung näher erläutert werden. Es zeigen
- Fig. 1: ein beispielhaftes Wicklungsschema einer dreiphasigen Rotorwicklung eines Drehstrom-Asynchron-Hydrogenerators;
- Fig. 2: die Verbindung der Enden der Wicklungsstäbe im Wickelkopf einer Wicklung nach Fig. 1, wie sie aus dem Stand der Technik bekannt ist;
- Fig. 3: in einer zu Fig. 2 vergleichbaren Darstellung die Verbindung der Enden der Wicklungsstäbe im Wickelkopf einer Wicklung gemäss einem bevorzugten Ausführungsbeispiel der Erfindung mittels Rundösen;und
- Fig. 4: in mehreren Teilfiguren 4(a) bis 4(c) unterschiedliche Ansichten einer Rundöse aus Fig. 3.

### WEGE ZUR AUSFÜHRUNG DER ERFINDUNG

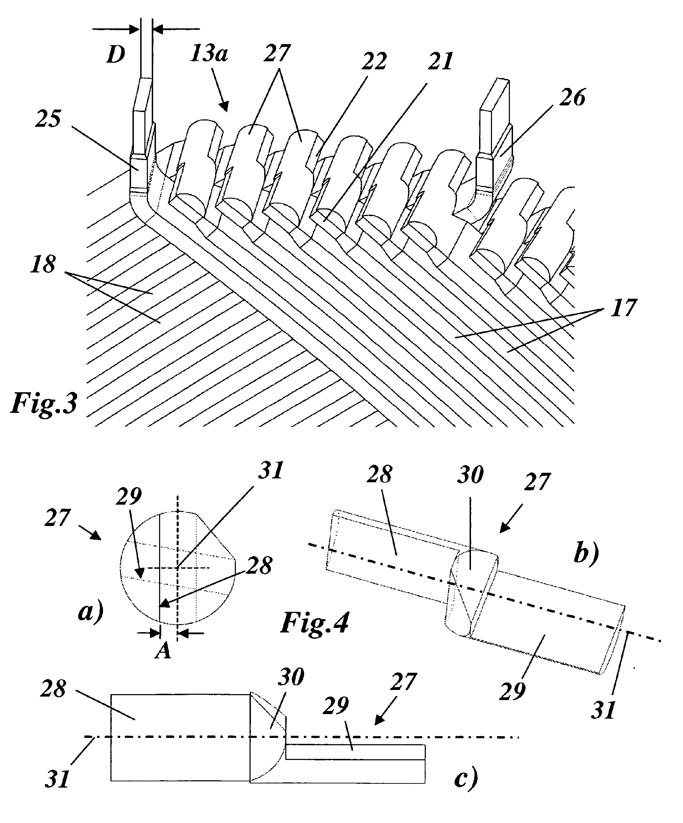

In Fig. 3 ist in einer zu Fig. 2 vergleichbaren Darstellung die Verbindung der Enden der Wicklungsstäbe im Wickelkopf 13a einer Wicklung gemäss einem bevorzugten Ausführungsbeispiel der Erfindung wiedergegeben. Die aus den Wicklungsnuten heraustretenden und am Ende der Wicklungsnuten einmal abgebogenen Wicklungsstäbe 17, 18 sind ohne eine zweite Biegung an den Stabenden so aufeinander zugeführt, dass sie sich mit ihren (geraden) Enden paarweise übereinander liegend kreuzen. Die sich kreuzenden Enden sind dabei die von der Isolierung freigelegten Leiter, die als Laschen 21, 22 aus den Stabenden herausstehen. Koaxial zur Kreuzungsachse der sich kreuzenden Laschen 21, 22 ist als einstückiges, elektrisch gut leitendes Verbindungselement eine Rundöse 27 angeordnet, welche fest mit den beiden Laschen 21, 22 verbunden ist. Ausgewählte Leiterstäbe, deren Enden unverbunden sind, sind ein zweites Mal in die axiale Richtung umgebogen und dienen mit den dadurch entstehenden Anschlussteilen 25, 26 zum Anschliessen der Wicklung.

Die eingesetzte Rundöse 27, die in Fig. 4 für sich genommen dargestellt ist, hat eine zylindrische Grundform mit einer Zylinderachse 31. Entlang der Zylinderachse 31 sind hintereinander, getrennt durch ein Mittelstück 30, zwei achsenparallele, sich kreuzende Anlageflächen 28 und 29 ausgebildet. Der Kreuzungswinkel der Anlageflächen 28, 29 entspricht dem Kreuzungswinkel der sich kreuzenden Laschen 21, 22. Der Abstand A der Anlageflächen 28, 29 zur Zylinderachse 31 entspricht der halben Dicke D/2 der Laschen 21, 22 (Fig. 3). Auf diese Weise gehen die Laschen 21, 22 bei montierter Rundöse 27 genau mittig durch den Zylinder der Rundöse 27. Wie man in Fig. 3 deutlich sehen kann, ist die Länge der Laschen 21, 22 kleiner oder gleich dem Aussendurchmesser der Rundöse 27, so dass die Laschen 21, 22 nicht über die Rundöse 27 störend hinausstehen. Durch das Mittelstück 30 der Rundöse wird der Stromübergang zwischen den Stabenden optimiert. Als Material für die Rundöse kann Kupfer, eine Kupferlegierung oder ein anderes elektrisch gut leitendes Material verwendet werden.

Insgesamt ergibt sich mit der Erfindung ein verkürzter Wickelkopf, der Kupfer einspart, die Kupferverluste verringert, sich leichter gegen Zentrifugalkräfte abstützen lässt (wenn die Wicklung eine Rotorwicklung ist), einfacher herzustellen und zu montieren ist und eine höhere mechanische Stabilität und Sicherheit zur Folge hat. Die erfindungsgemässe Wicklung kann sowohl als Rotor- als auch als Statorwicklung eingesetzt werden.

### BEZUGSZEICHENLISTE

- 10: Rotor
- 11: Rotorjoch
- 12: Wicklungsnut
- 13: Wicklung
- 13a,b: Wickelkopf
- 14,15: Anschluss
- 16: Verbindung
- 17,18: Wicklungsstab
- 19,20: Stabende (abgekröpft)
- 21,22: Lasche
- 23,24: Verbindungsteil
- 25,26: Anschlussteil (abgekröpft)
- 27: Rundöse
- 28,29: Anlagefläche
- 30: Mittelstück
- 31: Zylinderachse

## Patentansprüche

1. Elektrische Maschine, insbesondere Drehstrom-Asynchron-Hydrogenerator, mit einem Rotor (10) und einem Stator sowie einer Wicklung (13), welche eine Vielzahl von in axialer Richtung verlaufenden, in entsprechenden Wicklungsnuten (12) eines Joches (11) paarweise übereinander liegenden Wicklungsstäben (17, 18) umfasst, wobei die Wicklungsstäbe (17, 18) an den Stirnseiten der Maschine aus den Wicklungsnuten (12) heraustreten und mehrheitlich in einem Wickelkopf (13a,b) nach einem vorgegebenen Schema paarweise miteinander elektrisch verbunden sind, wobei jeweils ein oberer Wicklungsstab (18) einer ersten Wicklungsnut und ein unterer Wicklungsstab (17) einer zweiten Wicklungsnut derartig aufeinander zugebogen sind, dass ihre Enden (21, 22) in radialer Richtung sich kreuzend übereinanderliegen, und die Verbindung (16) der Wicklungsstäbe (17, 18) eines elektrisch verbundenen Wicklungsstabpaares mittels eines Verbindungselementes (27) erfolgt, wobei die Enden der miteinander elektrisch verbundenen Wicklungsstäbe (17, 18) als gerade Laschen (21, 22) mit rechteckigem Querschnitt ausgebildet sind, **dadurch gekennzeichnet, dass** das Verbindungselement (27) einstückig ist, und dass das Verbindungselement als in radialer Richtung orientierte Rundöse (27) ausgebildet ist, welche zwei in radialer Richtung kreuzend übereinander liegende Anlageflächen (28, 29) zur Anlage an den Laschen (21, 22) der miteinander zu verbindenden Wicklungsstäbe (17, 18) aufweist.

2. Elektrische Maschine nach Anspruch 1, **dadurch gekennzeichnet, dass** die Kreuzungswinkel der sich kreuzenden Wicklungsstabenden (21, 22) und der sich kreuzenden Anlageflächen (28, 29) der Rundöse (27) gleich sind.

3. Elektrische Maschine nach Anspruch 1 oder 2, **dadurch gekennzeichnet, dass** die Rundöse (27) eine zylindrische Grundform aufweist, und dass die Anlageflächen (28, 29) parallel zur Zylinderachse (31) angeordnet sind und von der Zylinderachse (31) einen Abstand (A) aufweisen, welcher der halben Dicke (D/2) der Laschen (21, 22) entspricht.

4. Elektrische Maschine nach einem der Ansprüche 1 bis 3, **dadurch gekennzeichnet, dass** die Rundöse (27) zwischen den beiden Anlageflächen (28, 29) ein Mittelstück (30) aufweist.

5. Elektrische Maschine nach Anspruch 3, **dadurch gekennzeichnet, dass** die Länge der Laschen (21, 22) kleiner oder gleich dem Aussendurchmesser der Rundöse (27) ist.

6. Elektrische Maschine nach einem der Ansprüche 1 bis 5, **dadurch gekennzeichnet, dass** die Wicklung (13) die Rotorwicklung der Maschine ist.

7. Elektrische Maschine nach einem der Ansprüche 1 bis 5, **dadurch gekennzeichnet, dass** die Wicklung die Statorwicklung der Maschine ist.

## Claims

1. An electrical machine, in particular a three-phase asynchronous hydrogenerator, with a rotor (10) and a stator and a winding (13), which comprises a large number of axially extending winding bars (17, 18), which lie one on top of the other in pairs in corresponding winding slots (12) of a core (11), wherein the winding bars (17, 18) emerge from the winding slots (12) at the end sides of the machine, and the majority of said winding bars are electrically connected to one another in pairs in an end winding (13a, 13b) in accordance with a predetermined scheme, wherein in each case one upper winding bar (18) of a first winding slot and one lower winding bar (17) of a second winding slot are bent towards one another in such a way that their ends (21, 22) lie one on top of the other so as to cross one another in the radial direction, and the connection (16) between the winding bars (17, 18) of an electrically connected winding bar pair is produced by means of a connecting element (27), wherein the ends of the electrically interconnected winding bars (17, 18) are in the form of straight lugs (21, 22) with a rectangular cross section, **characterized in that** the connecting element (27) is integral and **in that** the connecting element is in the form of a round eyelet (27) which is oriented in the radial direction and has two bearing faces (28, 29), which lie one on top of the other so as to cross one another in the radial direction, for bearing against the lugs (21, 22) of the winding bars (17, 18) to be connected to one another.

2. The electrical machine as claimed in claim 1, **characterized in that** the crossing angles of the mutually crossing winding bar ends (21, 22) and of the mutually crossing bearing faces (28, 29) of the round eyelet (27) are equal.

3. The electrical machine as claimed in claim 1 or 2, **characterized in that** the round eyelet (27) has a cylindrical basic shape, and **in that** the bearing faces (28, 29) are arranged parallel to the cylinder axis (31) and are spaced apart from the cylinder axis (31) by a distance (A) which corresponds to half the thickness (D/2) of the lugs (21, 22).

4. The electrical machine as claimed in one of claims 1 to 3, **characterized in that** the round eyelet (27) has a central piece (30) between the two bearing faces (28, 29).

5. The electrical machine as claimed in claim 3, **characterized in that** the length of the lugs (21, 22) is less than or equal to the outer diameter of the round eyelet (27).

6. The electrical machine as claimed in one of claims 1 to 5, **characterized in that** the winding (13) is the rotor winding of the machine.

7. The electrical machine as claimed in one of claims 1 to 5, **characterized in that** the winding is the stator winding of the machine.

## Revendications

1. Machine électrique, et plus particulièrement, générateur hydraulique asynchrone triphasé, comprenant un rotor (10) et un stator ainsi qu'un enroulement (13) comportant une pluralité de barres d'enroulement (17, 18) superposées les unes aux autres par paires et s'étendant en direction axiale dans des encoches d'enroulement (12) d'un étrier (11), dans laquelle les barres d'enroulement (17, 18) sortent des encoches d'enroulement (12) sur les faces avant de la machine et la plupart d'entre elles sont électriquement connectées les unes aux autres par paires selon un schéma prédéterminé dans une tête d'enroulement (13a, b), dans laquelle une barre d'enroulement supérieure respective (18) d'une première encoche d'enroulement et une barre d'enroulement inférieure (17) d'une seconde encoche d'enroulement sont repliées l'une sur l'autre de telle manière que leurs extrémités (21, 22) se superposent l'une l'autre en se croisant dans la direction radiale, et la connexion (16) des barres d'enroulement (17, 18) d'une paire de barres d'enroulement électriquement connectées s'effectue au moyen d'un élément de connexion (27), dans lequel les extrémités des barres d'enroulement (17, 18) électriquement connectées les unes aux autres sont réalisées sous la forme de pattes (21, 22) ayant une section transversale rectangulaire, **caractérisée en ce que** l'élément de connexion (27) est monolithique et **en ce que** l'élément de connexion est réalisé sous la forme d'un oeillet rond (27) qui comprend deux surfaces de support (28, 29) superposées l'une à l'autre en se croisant dans la direction radiale pour la mise en place des pattes (21, 22) des barres d'enroulement (17, 18) superposées les unes aux autres.

2. Machine électrique selon la revendication 1, **caractérisée en ce que** les angles de croisement des extrémités de barres d'enroulement (21, 22) se croisant mutuellement et les surfaces de support (28, 29) se croisant mutuellement de l'oeillet rond (27) sont identiques.

3. Machine électrique selon la revendication 1 ou 2, **caractérisée en ce que** l'oeillet rond (27) présente une forme de base cylindrique et **en ce que** les surfaces de support (28, 29) sont disposées parallèlement à l'axe (31) du cylindre et sont à une distance (A) de l'axe (31) du cylindre qui correspond à la moitié de l'épaisseur (D/2) des pattes (21, 22).

4. Machine électrique selon l'une quelconque des revendications 1 à 3, **caractérisée en ce que** l'oeillet rond (27) comprend une pièce intermédiaire (30) entre les deux surfaces de support (28, 29).

5. Machine électrique selon la revendication 3, **caractérisée en ce que** la longueur des pattes (21, 22) est inférieure ou égale au diamètre extérieur de l'oeillet rond (27).

6. Machine électrique selon l'une quelconque des revendications 1 à 5, **caractérisée en ce que** l'enroulement (13) est l'enroulement de rotor de la machine.

7. Machine électrique selon l'une quelconque des revendications 1 à 5, **caractérisée en ce que** l'enroulement est l'enroulement de stator de la machine.
